(19) Europäisches Patentamt
European Patent Office
Office européen des brevets

(11) **EP 3 255 390 B1**

(12) **EUROPÄISCHE PATENTSCHRIFT**

(45) Veröffentlichungstag und Bekanntmachung des Hinweises auf die Patenterteilung:
**04.08.2021 Patentblatt 2021/31**

(51) Int Cl.:
***G01F 1/66*** *(2006.01)*

(21) Anmeldenummer: **17000957.5**

(22) Anmeldetag: **06.06.2017**

(54) **VORRICHTUNG UND VERFAHREN ZUM MESSEN VON STRÖMUNGEN IN EINER FLUIDLEITUNG**

DEVICE AND METHOD FOR MEASURING FLOWS IN A FLUID LINE

DISPOSITIF ET PROCÉDÉ DE MESURE DES ÉCOULEMENTS DANS UNE CONDUITE DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2016 DE 102016007092**
**30.06.2016 DE 102016007930**

(43) Veröffentlichungstag der Anmeldung:
**13.12.2017 Patentblatt 2017/50**

(73) Patentinhaber: **em-tec GmbH**
**86923 Finning (DE)**

(72) Erfinder:
• **Burkhard, Manfred**
 **DE - 86911 Dießen (DE)**
• **Bober, Macìej**
 **DE - 86919 Utting am Ammersee (DE)**
• **Schätzl, Stefan**
 **DE - 86940 Schwifting (DE)**

(74) Vertreter: **Castell, Klaus**
**Patentanwaltskanzlei**
**Liermann-Castell**
**Am Rurufer 2**
**52349 Düren (DE)**

(56) Entgegenhaltungen:
**EP-A1- 0 036 658    EP-A1- 0 733 885**
**EP-A2- 0 605 944    WO-A1-93/04343**
**WO-A1-95/17650    WO-A1-2015/081958**
**DE-A1- 2 947 325    DE-A1-102006 023 478**

**Beschreibung**

Die Erfindung betrifft eine Vorrichtung und ein Verfahren zum Messen von Strömungen auf Grund des Brechungswinkels eines Schallstrahls, wenn dieser auf ein zu messendes Medium trifft mit einer Fluidleitung und Messkeramiken zur Erzeugung von Ultraschall, wobei die Messkeramiken auf einer Ebene angeordnet, an den Messkeramiken jeweils ein Prisma angeordnet ist und die Fluidleitung zwischen den Prismen angeordnet ist.

Bei Vorrichtungen, die auch als Ultraschallsensor bezeichnet werden, können zwei Messkeramikpaare an einer Seite der Fluidleitung angeordnet sein. Die Fluidleitung wird auch als Strömungsrohr bezeichnet. Je nach Anwendung können auch mehrere Fluidleitungen und mehrere Keramiken verwendet werden. Außerdem können beispielsweise auch an einer Fluidleitung mehr als zwei Sensoren vorgesehen werden, um beispielsweise die Genauigkeit der Messung zu erhöhen.

Die EP 0 605 944 A2 und die EP 0 733 885 A1 offenbaren Vorrichtungen, bei denen an den Messkeramiken jeweils ein Prisma angeordnet ist und die Fluidleitung zwischen den Prismen angeordnet ist. Die WO 95/17650 A1 offenbart eine Vorrichtung, bei der Messkeramiken in einer Ebene angeordnet sind, die parallel zur Achse der Fluidleitung liegt.

Die Anregerfrequenz von gegenüberliegenden Keramikpaaren ist immer gleich, um die gesendeten und empfangenen Signale verarbeiten zu können und liegt vorzugsweise im Bereich von 1,0 bis 5 MHz. Bei der Verwendung von mehr Keramikpaaren in einem Sensor können auch Keramiken mit unterschiedlichen Anregerfrequenzen verwendet werden, um die Einsatzmöglichkeiten eines Sensors auf unterschiedliche Fluideigenschaften zu ermöglichen.

Die Messkeramiken stehen mit einer Platine in Verbindung, auf der die Auswertungseinrichtung vorgesehen ist. Es können aber auch mehrere Platinen in einer Ebene oder in mehreren Ebenen verwendet werden.

Eine gattungsgemäße Vorrichtungen sind auch aus der EP 2 840 362 A1 bekannt und eine ähnliche Vorrichtung zeigt die EP 0 686 255 B1.

Bei diesen bekannten Vorrichtungen stehen die Messkeramiken / Sensoren horizontal zur Leiterplatine. Dies bedingt einen aufwändigen Aufbau und ein kompliziertes Herstellungsverfahren, was die Herstellungskosten negativ beeinflusst.

Der Erfindung liegt die Aufgabe zu Grunde den Aufbau einer derartigen Vorrichtung und das Messverfahren so zu optimieren, dass die Herstellungskosten gesenkt werden können. So kann der Sensor aus verschiedenen Standardkomponenten zusammengebaut und damit sehr leicht modifizierte werden für Spezialanwendungen im Ultraschallmessbereich. Des Weiteren werden mit dem beschriebenen Sensoraufbau neue Fertigungsverfahren möglich, so dass die Sensorkomponenten wie Prismen und Leiterplatten mit integrierten Ultraschallkeramiken unter Reinraumbedingungen zusammengebaut werden können.

Dies wird dadurch erreicht, dass in der Ebene oder parallel zur Ebene in einer Eben ein Elektronikboard angeordnet ist und die Fluidleitung zwischen den auf dem Elektronikboard angeordneten Messkeramiken angeordnet ist.

Dadurch wird es möglich, die Messkeramiken beispielsweise nebeneinander auf einer Leiterplatine anzuordnen und mit den Prismen den Ultraschall so zu lenken, dass er durch die Fluidleitung gelenkt wird. Dafür wird an den Messkeramiken jeweils ein Prisma angeordnet ist und in der parallelen Ebene oder parallel zur parallelen Ebene ist ein Elektronikboard angeordnet.

Die Fluidleitung kann in die Vorrichtung eingelegt werden. Vorteilhaft ist es jedoch, wenn die Fluidleitung in die Vorrichtung integriert ist und an ihren Enden jeweils einen Anschluss aufweist.

Die Prismen haben definierte Brechungswinkel zur Fluidleitung. Vorteilhaft ist es, wenn die Verbindungslinie der Messkeramiken diagonal zur Fluidleitung verläuft. Der Winkel des Primas ist vorzugsweise so optimiert, dass die Schallwellen um 45° reflektiert werden. Die Sendefrequenz der Keramik ist an die Schalllaufzeit des Prismas bzw. des Mediums angepasst. Treffen die Schallwellen auf das zu untersuchende Medium auf, so kommt es zu einer Brechung (Ablenkung) der Schallwellen. Die Brechung des Schallstrahls an den Grenzflächen erfolgt nach dem jeweiligen Verhältnis der Schallgeschwindigkeit. So ergibt sich ein Verhältnis nach O. Fiedler (Strömungs- und Durchflussmesstechnik, Otto Fiedler, München; Wien: Oldenbourg, 1992) für die Brechungswinkel:

$$\text{Cos } \alpha : \text{Cos } \beta : \text{Cos } \gamma = c_{\text{Messkeramik}} : c_{\text{Messkeramik/Prisma}} : c_{\text{Prisma/Medium}}$$

Der Winkel der Prismen zur Fluidleitung ist gemäß dem zu messenden Medium ausgelegt. Werden mehrere Prismen verwendet, können die Winkelanordnungen zur Fluidleitung unterschiedlich dimensioniert sein, um Volumenströmungen bei verschiedenen Medien zu messen.

Ein Ausführungsbeispiel ist in der Figur gezeigt und wird im Folgenden beschrieben. Es zeigt

Figur 1    eine Seitenansicht eines zweikanaligen Ultraschallsensors mit Fluidleitung, Prisma, Messkeramiken und Leiterplatine,

Figur 2    eine Draufsicht auf den in Figur 1 gezeigten Ultraschallsensor,

Figur 3    eine Draufsicht auf einen vierkanaligen Ultraschallsensor mit Fluidleitung, Prisma, Messkeramiken und Leiterplatine,

Figur 4    eine Draufsicht auf einen sechskanaligen Ultraschallsensor mit Fluidleitung, Prisma, Messkeramiken und Leiterplatine,

Figur 5    schematisch einen Zweikanal-Sensor mit Ein- und Auslaufstrecken des Schallsignals mit Brechungswinkel,

Figur 6    schematisch einen Vierkanal-Sensor mit Ein- und Auslaufstrecken,

Figur 7    einen Ultraschallsensor mit zwei Messkeramikpaaren, die unterschiedliche Brechungswinkel zur Fluidleitung haben.

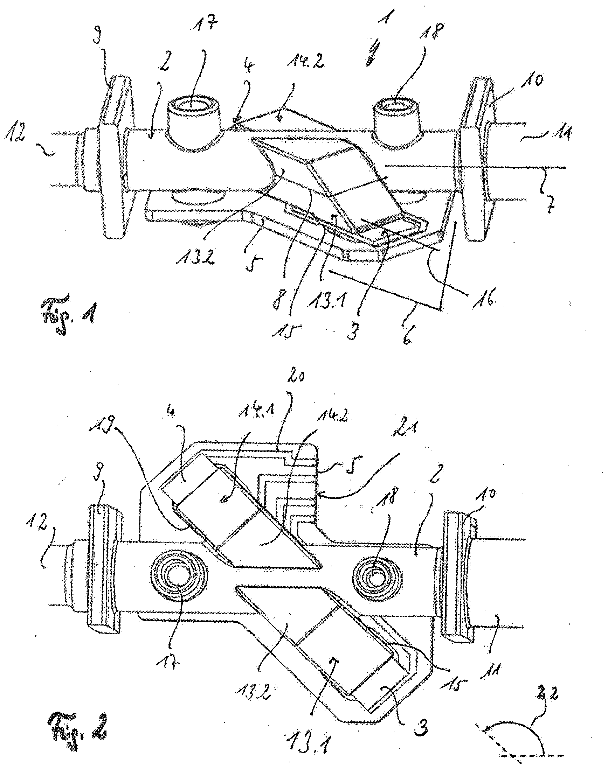

Der in Figur 1 gezeigte Ultraschallsensor 1 dient als Vorrichtung zum Messen von Strömungen und besteht im Wesentlichen aus einer Fluidleitung 2, die auch als Strömungsrohr bezeichnet wird und zwei Messkeramiken 3, 4 zur Erzeugung von Ultraschall. Die Messkeramiken 3 und 4 sind auf einem Elektronikboard 5 angeordnet, das im Ausführungsbeispiel eine Platine ist.

Diese Platine 5 liegt in einer Ebene 6, die parallel zu einer in Richtung der Fluidleitung 2 verlaufenden Achse 7 angeordnet ist.

In einer alternativen Ausführungsform kann die Fluidleitung auch in der Ebene des Elektronikboards liegen.

Die als Strömungsrohr ausgebildete Fluidleitung kann auch mehrere Kavitäten (nicht gezeigt) aufweisen, sodass mehrere unterschiedliche Fluide in der Fluidleitung strömen können.

Die Messkeramiken 3 und 4 sind in einer zur Ebene 6 parallelen Ebene 8 angeordnet.

Die Fluidleitung 2 hat an ihren Enden Halterungen 9, 10 jeweils einen Anschluss 11, 12. Die Anschlüsse 11, 12 können unterschiedlich Ausführungen haben, vorzugsweise als standardisiertes Luer oder Luer-Look System (IOS 80369-7:2016), Large oder Giant Bore.

An den Messkeramiken 3, 4 ist jeweils ein Prisma 13.1, 13.2 und 14.1, 14.2 angeordnet, um einen Ultraschallstrahl zu erzeugen, der durch die Fluidleitung von einem Prisma 13.1, 13.2 zum anderen Prisma 14.1, 14.2 bzw. von einer Messkeramik 3 zur anderen Messkeramik 4 führt.

Die gesamte Vorrichtung aus Elektronikboard 5, Messkeramiken 3, 4, Prismen 13.1, 13.2, 14.1, 14.2 und Fluidleitung 2 kann als Einwegprodukt hergestellt sein. Eine bevorzugte Ausführungsform sieht vor, dass die Fluidleitung 2 mit den Messkeramiken 3 und 4 und mit Elektronikboard 5 als ein Bauteil einstückig hergestellt wird. Durch enge Toleranzvorgaben bei der Platzierung der Keramiken 3, 4 auf dem Elektronikboard 5, den Prismen 13.1, 13.2, 14.1. 14.2 und eine exakte Positionierung durch die Befestigungseinrichtung 17, 18 passen die Komponenten optimal zusammen, ohne sie überarbeiten zu müssen. Um die Dämpfung der Ultraschallübergänge zwischen den Keramiken 3, 4 und den Prismen 13.1, 13.2, 14.1. 14.2 niedrig zu halten, werden sie miteinander verklebt.

Die Vorrichtung kann jedoch auch als Mehrwegprodukt hergestellt sein und insbesondere das Elektronikboard 5 und die Messkeramiken 3 und 4 können als Mehrwegprodukt hergestellt werden.

Eine Positioniereinrichtung 15 ermöglicht es die Messkeramik 3 auf einer Achse 16 zu verschieben, um die Sensoreigenschaften anzupassen.

Quer zur Fluidleitung 2 erstrecken sich an beiden Seiten der Achse 16 jeweils eine Befestigungseinrichtung 17, 18 an der Fluidleitung 2.

Die Figur 2 zeigt, dass der Positioniereinrichtung 15 gegenüberliegend für die Messkeramik 4 eine zweite Positioniereinrichtung 19 vorgesehen ist. Die Leiterbahnen 20 führen zu einer Anschlussstelle 21, an der ein Stecker (nicht gezeigt) angeordnet werden kann. Der Winkel 22 zeigt die Winkelanordnung der Keramiken auf der Platine und den Brechungswinkel der Prismen.

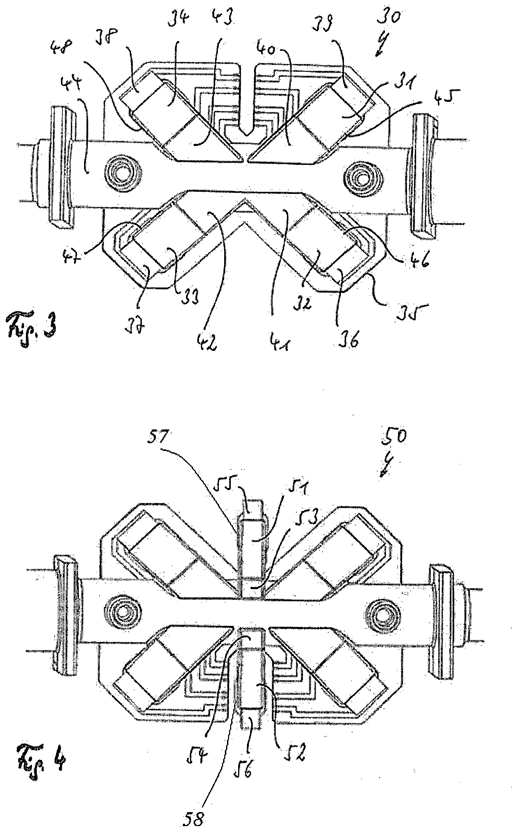

Das in Figur 3 gezeigte Ausführungsbeispiel ist ähnlich dem in den Figuren 1 und 2 gezeigten Ausführungsbeispiel aufgebaut. Dieses Ausführungsbeispiel zeigt eine Vorrichtung 30 mit vier Messkeramiken 36, 37, 38 und 39. Diese Messkeramiken sind auf einer Leiterplatine 35 über Positioniereinrichtungen 45, 46, 47 und 48 befestigt. Der Schall wird über Prismen 40, 41, 42 und 43 wird so umgelenkt, dass er jeweils zwischen den Prismen 40 und 42 bzw. 41 und 43 durch die Fluidleitung 44 fließt. Alle Messkeramiken 36, 37, 38 und 39 und alle Prismen 31, 32, 33, 34, 40, 41, 42 und 43 sind jeweils in einer Ebene angeordnet, die parallel zur Ebene der Platine 35 liegt.

Die Figur 4 zeigt eine Ausführungsform 50, die im Wesentlichen der in Figur 3 gezeigten Ausführungsform entspricht und zusätzlich zwei Messkeramiken 55, 56 und zwei Prismenpaare 51, 53 und 52, 54 aufweist. Die Messkeramiken sind wiederum in Positioniereinrichtungen 57, 58 angeordnet.

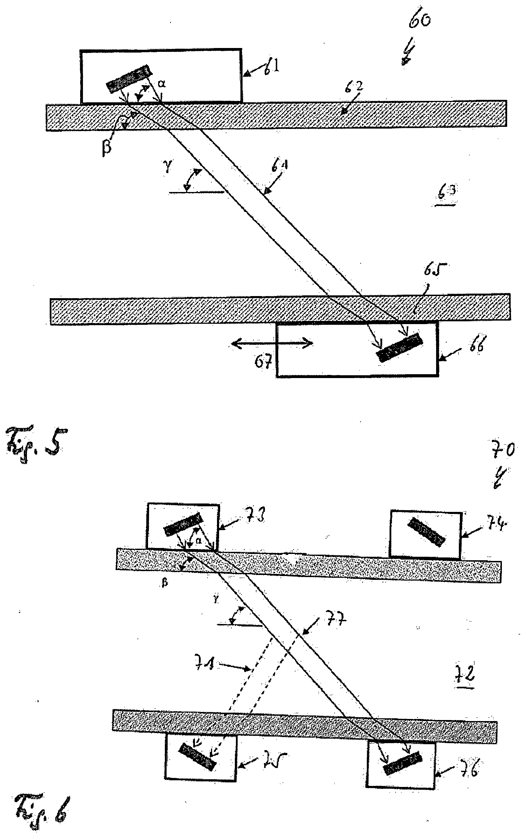

Der schematische Aufbau eines abgelenkten Schallstrahls ist in Figur 5 gezeigt. Bei dieser Vorrichtung 60 wird der Schall von der Messkeramik 61 über das Prisma 62 in das Medium 63 geführt. Der Schallstrahl 64 gelangt aus dem Medium 63 in ein weiteres Prisma 65 und von dort zur Messkeramik 66. Die Messkeramik 66 ist über eine Positioniereinrichtung 67 verschiebbar. Die eingezeichneten Winkel $\alpha$ und $\beta$ sind abhängig von den sensorspezifischen Materialeigenschaften der Messkeramik 61 und des Prismas 62. Da die Materialeigenschaften dieser Komponenten idealerweise nur geringen Toleranzen aufweisen, werden die Brechungswinkel $\alpha$ und $\beta$ als konstant angenommen. Sie können für jeden Sensortyp optimiert werden, wenn der Schallstrahl 64 auf das zu messende Medium 63 trifft, hängt der Brechungswinkel $\gamma$ von den Eigenschaften des Mediums (z. B. Dichte, Temperatur, Viskosität, Schalleigenschaft) ab. Der Schallstrahl 64 wird entsprechend des Mediums 63 abgelenkt und trifft auf die zweite Messkeramik 66.

Durch die Positioniereinrichtung 67 der zweiten Messkeramik 66 kann die Sensoreigenschaft angepasst werden. Dabei können die beiden Messkeramiken 61 und 66 sowohl als Sender als auch Empfänger dienen.

Die Figur 6 zeigt einen Vierkanalsensor 70, der im Wesentlichen wie der in der Figur 5 gezeigte Zweikanalsensor 60 aufgebaut ist. Bei diesem Vierkanalsensor 70 können die Schalllaufeigenschaften in Bezug auf die Streustrahlung 71 gemessen werden, die durch die Eigenschaften des Mediums 72, wie beispielsweise Temperatur und Viskosität verursacht werden. Der Aufbau mit den vier Messkeramiken 73, 74 ,75 und 76 ermöglicht es, die Streustrahlung 71 mit einer Messkeramik 75 zu messen, die von dem Schallstrahl 77 im Medium 72 erzeugt wird.

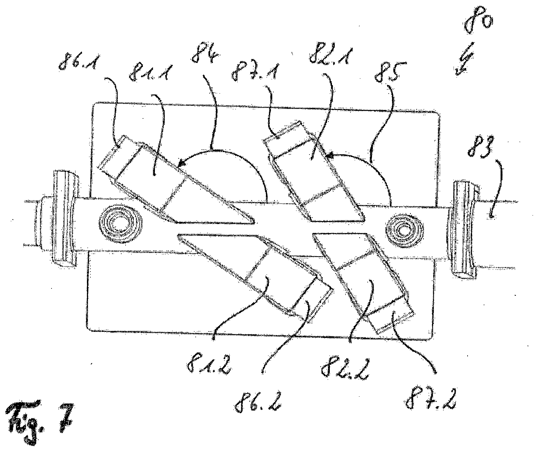

Die Figur 7 zeigt einen Ultraschallsensor 80 mit zwei Messkeramikpaaren (81.1, 81.2 und 82.1, 82.2), die unterschiedliche Brechungswinkel 84, 85 zur Fluidleitung 83 haben. Die Winkelanordnung der Keramiken auf der Platine (86.1, 86.2, 87.1, 87.2) haben den identischen Wert des Brechungswinkels 84, 85 der Prismen.

**Patentansprüche**

1. Vorrichtung (1) ausgeführt zum Messen von Strömungen auf Grund des Brechungswinkels eines Schallstrahls, wenn dieser auf ein zu messendes Medium trifft, mit einer Fluidleitung (2) und Messkeramiken (3, 4) zur Erzeugung von Ultraschall, wobei die Messkeramiken (3, 4) in einer Ebene angeordnet sind, die parallel zur Achse der Fluidleitung liegt, an den Messkeramiken (3, 4) jeweils ein Prisma (13.1, 13.2, 14.1, 14.2) angeordnet ist, welches den Ultraschall in die Fluidleitung lenkt, **dadurch gekennzeichnet, dass** die Fluidleitung zwischen den Prismen (13.1, 13.2, 14.1, 14.2) angeordnet ist, wobei in der Ebene oder parallel zur Ebene in einer weiteren Ebene ein Elektronikboard (5) angeordnet ist.

2. Vorrichtung nach Anspruch 1, **dadurch gekennzeichnet, dass** die Verbindungslinie der Messkeramiken (3, 4) diagonal zur Fluidleitung (2) verläuft.

3. Vorrichtung nach einem der vorhergehenden Ansprüche, **dadurch gekennzeichnet, dass** auf mehreren Ebenen (6) parallel zur Fluidleitung (2) Elektronikboards (5) angeordnet sind.

4. Vorrichtung nach einem der vorhergehenden Ansprüche, **dadurch gekennzeichnet, dass** die Prismen (13.1, 13.2, 14.1, 14.2) und die Messkeramiken (3, 4) unterschiedliche Brechungswinkel bzw. Winkel (84, 85) gegenüber der Fluidleitung (2) aufweisen.

5. Vorrichtung nach einem der vorhergehenden Ansprüche, **dadurch gekennzeichnet, dass** die Fluidleitung (2) an ihren Enden (9, 10) jeweils einen Anschluss, vorzugsweise ein standardisiertes System, aufweist.

6. Vorrichtung nach einem der vorhergehenden Ansprüche, **dadurch gekennzeichnet, dass** die Fluidleitung (2) mehrere Kavitäten aufweist.

7. Verfahren zum Messen von Strömungen in einer Fluidleitung (2) unter Verwendung einer Vorrichtung nach einem der Ansprüche 1 bis 6 auf Grund des Brechungswinkels eines Schallstrahls, wenn dieser auf ein zu messendes Medium trifft.

8. Verfahren nach Anspruch 7, **dadurch gekennzeichnet, dass** der Ultraschall von einer der Messkeramiken (3, 4) diagonal zur Fluidleitung (2) zur anderen Messkeramik (3, 4) verläuft.

**Claims**

1. A device (1) designed to measure flows on the basis of the angle of refraction of a sound beam, when the latter strikes a medium to be measured, with a fluid line (2) and measuring ceramics (3, 4) for generating ultrasound, wherein the measuring ceramics (3, 4) are arranged in a plane, which lies parallel to the axis of the fluid line, a prism (13.1, 13.2, 14.1, 14.2) is arranged in each case on the measuring ceramics (3, 4), which prism directs the ultrasound into the fluid line, ***characterised in that*** the fluid line is arranged between the prisms (13.1, 13.2, 14.1, 14.2), wherein an electronics board (5) is arranged in the plane or parallel to the plane in a further plane.

2. The device according to claim 1, ***characterised in that*** the connecting line of the measuring ceramics (3, 4) runs diagonally to the fluid line (2).

3. The device according to any one of the preceding claims, ***characterised in that*** electronics boards (5) are arranged on a plurality of planes (6) parallel to the fluid line (2).

4. The device according to any one of the preceding claims, ***characterised in that*** the prisms (13.1, 13.2, 14.1, 14.2) and the measuring ceramics (3, 4) have different angles of refraction or angles (84, 85) with respect to the fluid line (2).

5. The device according to any one of the preceding claims, ***characterised in that*** the fluid line (2) comprises at its ends (9, 10) in each case a connection, preferably a standardised system.

6. The device according to any one of the preceding claims, ***characterised in that*** the fluid line (2) comprises a plurality of cavities.

7. A method for measuring flows in a fluid line (2) using a device according to any one of claims 1 to 6 on the basis of the angle of refraction of a sound beam, when the latter strikes a medium to be measured.

8. The method according to claim 7, ***characterised in that*** the ultrasound from one of the measuring ceramics (3, 4) runs diagonally to the fluid line (2) to the other measuring ceramic (3, 4).


**Revendications**

1. Dispositif (1), réalisé pour mesurer des courants sur la base de l'angle de réfraction d'un rayon sonore, lorsque celui-ci est incident sur un fluide qui doit être mesuré, doté d'une conduite de fluide (2) et de céramiques de mesure (3, 4) pour générer des ultrasons, les céramiques de mesure (3, 4) étant placées dans un plan qui se situe à la parallèle de l'axe de la conduite de fluide, sur les céramiques de mesure (3, 4) étant placé respectivement un prisme (13.1, 13.2, 14.1, 14.2) qui dirige les ultrasons dans la conduite de fluide, ***caractérisé en ce que*** la conduite de fluide est placée entre les prismes (13.1, 13.2, 14.1, 14.2), dans le plan ou à la parallèle du plan étant placée dans un plan supplémentaire une carte électronique (5).

2. Dispositif selon la revendication 1, ***caractérisé en ce que*** la ligne de liaison des céramiques de mesure (3, 4) s'écoule à la diagonale de la conduite de fluide (2).

3. Dispositif selon l'une quelconque des revendications précédentes, ***caractérisé en ce que*** des cartes électroniques (5) sont placées sur plusieurs plans (6), à la parallèle de la conduite de fluide (2).

4. Dispositif selon l'une quelconque des revendications précédentes, ***caractérisé en ce que*** les prismes (13.1, 13.2, 14.1, 14.2) et les céramiques de mesure (3, 4) font preuve d'un angle de réfraction ou d'un angle (84, 85) différent par rapport à la conduite de fluide (2).

5. Dispositif selon l'une quelconque des revendications précédentes, ***caractérisé en ce que*** la conduite de fluide (2) comporte sur ses extrémités (9, 10) respectivement un raccord, de préférence un système standardisé.

6. Dispositif selon l'une quelconque des revendications précédentes, ***caractérisé en ce que*** la conduite de fluide (2) comporte plusieurs cavités.

7. Procédé, destiné à mesurer des courants dans une conduite de fluide (2) en utilisant un dispositif selon l'une quelconque des revendications 1 à 6, sur la base de l'angle de réfraction d'un rayon sonore, lorsque celui-ci est incident sur un fluide qui doit être mesuré.

8. Procédé selon la revendication 7, ***caractérisé en ce que*** les ultrasons s'écoulent à partir de l'un des céramiques de mesure (3, 4), à la diagonale de la conduite de fluide (2) vers l'autre céramique de mesure (3, 4).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0605944 A2
- EP 0733885 A1
- WO 9517650 A1
- EP 2840362 A1
- EP 0686255 B1

**In der Beschreibung aufgeführte Nicht-Patentliteratur**

- **O. FIEDLER ; OTTO FIEDLER.** *Strömungs- und Durchflussmesstechnik,* 1992